# EUROPEAN PATENT APPLICATION

(11) **EP 1 700 832 A1**
(43) Date of publication of application: **13.09.2006**
(21) Application number: 05005092.1
(22) Date of filing: 09.03.2005
(51) Int. Cl.: C03B 37/012, C03B 19/01, C03B 19/10, C01B 33/18

(54) **A method of producing glass of optical quality**

(71) Applicant: Degussa AG, 40474 Düsseldorf (DE)
(72) Inventor: Oswald Monika, 63454 Hanau (DE); Meyer Jürgen, 63811 Stockstadt (DE); Deller Klaus, 63512 Hainburg (DE)

(57) **Abstract**

Glass is produced by depositing presintering composition on a preform set to move in front of a plasma torch whch moves back and forth substantially parallel to a longitudinal direction of the preform, a first feed duct feeds the plasma with grains of the presintering composition while optionally a second feed duct feeds the plasma with a fluorine or chlorine compound, preferably a fluorine compound, mixed with a carrier gas, whereby the presintering composition preferably consists of granules of metal oxides or metalloid oxides of a pyrogenic silicon dioxide powder with a BET surface area of 30 to 90 m²/g, a DBP index of 80 or less, a mean aggregate area of less than 25000 nm² and a mean aggregate circumference of less than 1000 nm, wherein at least 70% of the aggregates have a circumference of less than 1300 nm or a high-purity pyrogenically prepared silicon dioxide having metal contents of less than 0.2 µg/g, which is prepared by reacting a silicon tetrachloride having a metal content of less than 30 ppb by means of flame hydrolysis.

## Description

The invention relates to a method of producing glass of optical quality, by melting or, optionally by purifying a presintering composition, and to applying said method to depositing an optionally purified presintering composition on an optical fiber preform, in which a substantially-cylindrical preform that extends in a longitudinal direction is set into rotation about its axis in front of a plasma or a flame which moves back and forth substantially parallel to the longitudinal direction of the preform, and in which a first feed duct feeds grains of a presintering composition.

In known manner, a preform is obtained by chemical vapor deposition implemented inside a tube mounted on a glassmaker's lathe, and which is subjected to a collapsing operation to form a solid preform.

For multimode fibers, that way of making preforms suffices. However, for monomode fibers it is advantageous to add material to the preform in order to increase its diameter and thus obtain, during fiber drawing, a continuous fiber that is several tens of kilometers long.

Material is added to the preform by means of a plasma torch. The preform is cylindrical in shape and it is set into rotation about its axis in front of the torch whose plasma is fed with grains of material, like a presintering composition.

The grains are melted and then deposited and vitrified on the preform. A plurality of passes are performed to build up to the desired diameter.

Depositing material, like a presintering composition suffers from a major drawback. Alkali elements such as sodium or lithium are present in non-negligible quantities in this type-of material, and they are present in the deposited grains, thereby encouraging the formation of bonds between the OH group and the dopant elements, such as germanium (Ge). Such bonds are absorbent at certain wavelengths, thereby increasing the attenuation losses of the optical fiber at said wavelengths.

The object of the invention is to provide a method of purifying a presintering composition.

Subject of the invention is a method of producing glass of optical quality by melting, or optionally by purifying a presintering composition in which a plasma or a flame from a heat energy supply means is fed by a first feed duct with grains of a presintering composition, wherein optionally a second feed duct feeds the plasma or flame with a fluorine or chlorine compound (preferably a fluorine compound) mixed with a carrier gas, the feed conditions of the two ducts are adjusted to cause alkali or alkaline-earth elements contained in the presintering composition grains to react with the fluorine or the chlorine (preferably the fluorine) of the fluorine or chlorine compound (preferably a fluorine compound).

The object of the invention is also to apply the method of purifying a presintering composition to depositing a presintering composition on an optical fiber preform, the deposit containing only a very small quantity of alkali or alkaline-earth elements.

The subject of the invention also provides a method of depositing a presintering composition on optical devices, in which a preform extending in a longitudinal direction is set into move, preferred rotation about its axis in front of a plasma or flame coming from a heat energy supply means which moves back and forth substantially parallel to the longitudinal direction of the preform, and in which a first feed duct feeds the plasma or the flame with grains of a presintering composition, wherein optionally a second feed duct feeds the plasma or flame with a fluorine or chlorine compound (preferably a fluorine compound) mixed with a carrier gas, the feed conditions of the two ducts being adjusted to cause alkali or alkaline- earth elements contained in the grains of a presintering composition to react with the fluorine or the chlorine (preferably the fluorine) of the fluorine or chlorine compound (preferably a fluorine compound).

Optical devices can be optical fiber form, crucibles, accessories, rod, high temperature resistent materials, glass preforms and/or optical lenses.

The plasma or flame is the seat of a chemical reaction in which the molten presintering composition react with the fluorine or chlorine compound of the carrier gas. Advantageously, the temperature of the plasma can be adjusted to obtain high efficiency in the reaction, given the feed rates of the ducts feeding the carrier gas and for feeding the presintering composition. A higher temperature makes it possible to maintain good reaction efficiency while increasing the feed rates of the feed ducts.

Also advantageously, it is possible to adjust the content of the fluorine or chlorine compound (preferably a fluorine compound) in the carrier gas as a function of the mean size of the presintering composition. Smaller granules make it possible to maintain good reaction efficiency with a carrier gas that is less rich in the fluorine or chlorine compound (preferably a fluorine compound).

By eliminating alkaline elements from the deposit of a presintering composition, it is possible to build up the optical devices using a starting material that is much less expensive.

Other characteristics and advantages of the invention will appear on reading the following description of an example.

The method of melting or purifying a presintering composition makes it possible to deposit one or more layers of a presintering composition on optical devices and that contain only negligible amounts of alkali elements such as sodium or lithium, or of alkaline-eart elements.

The deposition operation, also known as a building-up operation, serves to increase the diameter of a preform, to enable a continuous fiber to be drawn therefrom that is several tens of kilometers long.

The method comprises a plasma torch including electrical inductor components.

A preform in the form of a cylinder extends in a longitudinal direction L and is caused to rotate about its axis as indicated by arrow.

The plasma torch moves back and forth substantially parallel to the longitudinal direction of the preform. The preform is rotated by a glassmaker's lathe. The chucks of the lathe drive two glass rods which are welded to the two ends of the preform. The lathe is placed in an enclosed box that provides protection against electromagnetic radiation and against gaseous discharges from the chemical reaction.

A first feed duct delivers grains of a presintering composition to the plasma.

The feed is performed merely by gravity. A valve is placed outside the box to allow the feed rate to be adjusted.

A second feed duct feeds the plasma with a gas that conveys a given content of a fluorine or chlorine compound, and preferably of a fluorine compound. The carrier gas is preferably air. The fluorine compound is, for example, sulfur hexafluoride SF₆, or a Freon selected from those authorized under European regulations, such as C₂F₆. The chlorine compound may be chlorine gas Cl₂, for example. A valve connected to a gas supply placed outside the box serves to adjust the carrier gas flow rate. Another valve connected to the gas supply serves to adjust the content of fluorine or chlorine compound in the carrier gas. The carrier gas may be constituted solely by the fluorine or chlorine compound, preferably a fluorine compound, in the pure state.

The plasma is the seat of a chemical reaction between the presintering composition grains and the fluorine or chlorine, preferably fluorine compound. The temperature of the plasma lies in the range 5000 °C. to 10,000 °C., causing the presintering composition grains to melt. The fluorine or chlorine compounds react with the alkali elements such as sodium or lithium that are present in the presintering composition, causing the fluorides NaF or LiF or the chlorides NaCl or LiCl to be given off in gaseous form.

Good reaction efficiency is obtained under the following operating conditions:
plasma power 40 kW to 100 kW
presintering composition 0.2 kg/h to 5 kg/h
flow rate
carrier gas flow rate 0 to 15 liters/min
fluorine compound content in 0.3 % to 100 %
carrier gas.

In a preferred subject of the invention the presintering composition can be granules of metaloxides or metalloidoxides, which can be prepared by dispersing the metaloxides or metalloidoxides in water, spray drying it and heating the granules obtained at a temperature of from 150 to 1.100 °C for a period of 1 to 8 h.

In a preferred subject of the invention the metaloxide or metalloidoxide can be silica granules, i.e.:
a) pyrogenically produced silicon dioxide which has been compacted to granules having
   - a tamped density of from 150 g/l to 800 g/l,
   - a granule particle size of from 10 to 800 µm
   - and a BET surface area of from 10 to 500 m²/g, or
b) pyrogenically produced silicon dioxide which has been compacted to granules, having the following physico-chemical data:
   mean particle diameter: from 25 to 120 µm,
   BET surface area: from 40 to 400 m²/g,
   pore volume: from 0.5 to 2.5 ml/g,
   pore distribution: no pores with a diameter < 5 nm, only meso- and macro-pores are present,
   pH value: from 3.6 to 8.5,
   tamped density: from 220 to 700g/l.

The compacting step can be made according to U.S. Patent No. 5,776,240.

In a preferred embodiment of the invention, a pyrogenically produced silicon dioxide which has been granulated or compacted in a known manner according to U.S. Patent No. 5,776,240 can be used in the production of a presintered composition.

The silicon dioxide so compacted or granulated can be a pyrogenically produced oxide having a BET surface area of from 10 to 500 m²/g, a tamped density of from 150 to 800 g/l and a granule particle size of from 10 to 800 µm.

Hereinbelow, the expressions "pyrogenically produced silica", "pyrogenically produced silicon dioxide", "pyrogenic silica" and "pyrogenic silican dioxide " are to be understood as meaning very finely divided, nanoscale powders produced by converting gaseous silicon compounds, such as, for example, methyltrichlorosilane or silicon tetrachloride in a high-temperature flame, wherein the flame is fed with hydrogen and oxygen and water vapor can optionally be supplied thereto.

Hereinbelow, the term "granules" is to be understood as meaning pyrogenically produced silicon dioxide powders highly compacted by means of the compaction process described in U.S. Patent No. 5,776,240 or analogously to that process.

For the method according to the invention, either pyrogenically produced silicon dioxide which has been compacted to granules by means of a downstream compacting step according to DE 196 01 415 A1 is used, which corresponds to U.S.Patent No. 5,776,240, having a tamped density of from 150 g/l to 800 g/l, preferably from 200 to 500 g/l, a granule particle size of from 10 to 800 µm and a BET surface area of from 10 to 500 m²/g, preferably from 20 to 130 m²/g, or granules according to U.S.Patent No. 5,776,240, based on pyrogenically produced silicon dioxide are used, having the following physico-chemical data:
- mean particle diameter from 25 to 120 µm;
- BET surface area from 40 to 400 m²/g;
- pore volume from 0.5 to 2.5 ml/g;
- pore distribution: no pores with a diameter < 5 nm, only meso- and macro-pores are present;
- pH value from 3.6 to 8.5;
- tamped density from 220 to 700
   g/l.

According to the invention the following presintering composition can be used:
a) A pyrogenically produced silicon dioxide having a BET surface area of 90 m²/g and a bulk density of 35 g/l and a tamped density of 59 g/l is compacted to a granulate according to U.S.Patent No. 5,776,240. The compacted silicon dioxide has a BET surface area of 90 m²/g and a tamped density of 246 g/l.
b) A pyrogenically produced silicon dioxide having a BET surface if 50 m²/g and a tamped density of 130 g/l is compacted to a granulate according to U.S. Patent No. 5,776,240. The compacted silicon dioxide has a BET surface area of 50 m²/g and a tamped density of 365 g/l.
c) A pyrogenically produced silicon dioxide having a BET surface area of 300 m²/g and a bulk density of 30 g/l and a tamped density of 50 g/l is compacted according to U.S.Patent No. 5,776,240. The compacted silicon dioxide has a BET surface area of 300 m²/g and a tamped density of 289 g/l.
d) A pyrogenically produced silicon dioxide having a BET surface area of 200 m²/g and a bulk density of 35 g/l and a tamped density of 50 g/l is compacted according to U.S. Patent No. 5,776,240. The compacted silicon dioxide has a BET surface area of 200 m²/g and a tamped density of 219 g/l.

The chief process for the preparation of pyrogenic silicon dioxide, starting from silicon tetrachloride which is reacted in mixture with hydrogen and oxygen, is known from Ullmanns Enzyklopädie der technischen Chemie, 4th edition, Vol. 21, pp. 464 et seq. (1982).

The metal oxide or metalloid oxide to be used accordingly to the invention can be granules based on pyrogenically produced silicon dioxide powder with
- a BET surface area of 30 to 90 m²/g,
- a DBP index of 80 or less
- a mean aggregate area of less than 25000 nm²,
- a mean aggregate circumference of less than 1000 nm, wherein at least 70% of the aggregates have a circumference of less than 1300 nm. This pyrogenically produced silicon dioxide is disclosed in WO 2004/054929.

The BET surface area may preferably be between 35 and 75 m²/g. Particularly preferably the values may be between 40 and 60 m²/g. The BET surface area is determined in accordance with DIN 66131.

The DBP index may preferably be between 60 and 80. During DBP absorption, the take-up of force, or the torque (in Nm), of the rotating blades in the DBP measuring equipment is measured while defined amounts of DBP are added, comparable to a titration. A sharply defined maximum, followed by a drop, at a specific added amount of DBP is then produced for the powder according to the invention.

A silicon dioxide powder with a BET surface area of 40 to 60 m²/g and a DBP index of 60 to 80 may be particularly preferred.

Furthermore, the silicon dioxide powder to be used according to the invention may preferably have a mean aggregate area of at most 20000 nm². Particularly preferably, the mean aggregate area may be between 15000 and 20000 nm². The aggregate area can be determined, for example, by image analysis of TEM images. An aggregate is understood to consist of primary particles of similar structure and size which have intergrown with each other, the surface area of which is less than the sum of the individual isolated primary particles. Primary particles are understood to be the particles which are initially formed in the reaction and which can grow together to form aggregates as the reaction proceeds further.

A silicon dioxide powder with a BET surface area of 40 to 60 m²/g, a DBP index of 60 to 80 and a mean aggregate area between 15000 and 20000 nm² may be particularly preferred.

In a preferred embodiment, the silicon dioxide powder to be used according to the invention may have a mean aggregate circumference of less than 1000 nm. Particularly preferably, the mean aggregate circumference may be between 600 and 1000 nm. The aggregate circumference can also be determined by image analysis of TEM images.

A silicon dioxide powder with a BET surface area of 40 to 60 m²/g, a DBP index of 60 to 80, a mean aggregate area between 15000 and 20000 nm² and a mean aggregate circumference between 600 and 1000 nm may be particularly preferred.

Furthermore, it may be preferable for at least 80%, particularly preferably at least 90%, of the aggregates to have a circumference of less than 1300 nm.

In a preferred embodiment, the silicon dioxide powder to be used according to the invention may assume a degree of filling in an aqueous dispersion of up to 90 wt.%. The range between 60 and 80 wt.% may be particularly preferred.

Determination of the maximum degree of filling in an aqueous dispersion is performed by the incorporation of powder, in portions, into water using a dissolver, without the addition of other additives. The maximum degree of filling is achieved when either no further powder is taken up into the dispersion, despite elevated stirring power, i.e. the powder remains in dry form on the surface of the dispersion, or the dispersion becomes solid or the dispersion starts to form lumps.

Furthermore, the silicon dioxide powder to be used according to the invention may have a viscosity at a temperature of 23°C, with respect to a 30 wt.% aqueous dispersion at a rate of shear of 5 rpm, of less than 100 mPas. In particularly preferred embodiments, the viscosity may be less than 50 mPas.

The pH of the silicon dioxide powder to be used according to the invention may be between 3.8 and 5, measured in a 4% aqueous dispersion.

The process for preparing the silicon dioxide powder to be used according to the invention, is characterised in that at least one silicon compound in the vapour form, a free-oxygen-containing gas and a combustible gas are mixed in a burner of known construction, this gas mixture is ignited at the mouth of the burner and is burnt in the flame tube of the burner, the solid obtained is separated from the gas mixture and optionally purified, wherein
- the oxygen content of the free-oxygen-containing gas is adjusted so that the lambda value is greater than or equal to 1,
- the gamma-value is between 1.2 and 1.8,
- the throughput is between 0.1 and 0.3 kg SiO₂/m³ of core gas mixture,
- the mean normalised rate of flow of gas in the flame tube at the level of the mouth of the burner is at least 5 m/s.

The oxygen content of the free-oxygen-containing gas may correspond to that of air. That is, in this case air is used as a free-oxygen-containing gas. The oxygen content may, however also take on higher values. In a preferred manner, air enriched with oxygen should have an oxygen content of not more than 40 vol.%.

Lambda describes the ratio of oxygen supplied in the core to the stoichiometrically required amount of oxygen. In a preferred embodiment, lambda lies within the range 1 < lambda ≤ 1.2.

Gamma describes the ratio of hydrogen supplied in the core to the stoichiometrically required amount of hydrogen. In a preferred embodiment, gamma lies within the range 1.6 < gamma ≤ 1.8.

The normalised rate of flow of gas refers to the rate of flow at 273 K and 1 atm.

A burner of known construction is understood to be a burner with concentric tubes. The core gases are passed through the inner tube, the core. At the end of the tube, the mouth of the burner, the gases are ignited. The inner tube is surrounded by at least one other tube, the sleeve. The reaction chamber, called the flame tube, starts at the level of the mouth of the burner. This is generally a conical tube, cooled with water, which may optionally be supplied with other gases (sleeve gases) such as hydrogen or air.

The mean, normalised rate of flow of the gas in the flame tube at the level of the mouth of the burner of at least 5 m/s refers to the rate of flow immediately after the reaction mixture leaves the burner. The rate of flow is determined by means of the volume flow of the reaction products in vapour form and the geometry of the flame tube.

The core gases are understood to be the gases and vapours supplied to the burner, that is the free-oxygen-containing gas, generally air or air enriched with oxygen, the combustible gas, generally hydrogen, methane or natural gas, and the silicon compound or compounds in vapour form.

An essential feature of the process is that the mean normalised rate of flow of gas in the flame tube at the level of the mouth of the burner is at least 5 m/s. In a preferred embodiment, the mean normalised rate of flow of the gas in the flame tube at the level of the mouth of the burner assumes values of more than 8 m/s.

The mean rate of discharge of the gas mixture (feedstocks) at the mouth of the burner is not limited. However, it has proven to be advantageous when the rate of discharge at the mouth of the burner is at least 30 m/s.

In a preferred embodiment, additional air (secondary) may be introduced into the reaction chamber, wherein the rate of flow in the reaction chamber may be raised further.

In a preferred embodiment, the mean normalised rate of flow of gas in the flame tube at the level of the mouth of the burner may be 8 to 12 m/s.

The type of silicon compound used in the process is not further restricted. Silicon tetrachloride and/or at least one organochlorosilicon compound may preferably be used.

A particularly preferred embodiment of the process is one in which
- silicon tetrachloride is used,
- the lambda value is such that 1 < lambda ≤ 1.2,
- the gamma-value is between 1.6 and 1.8,
- the throughput is between 0.1 and 0.3 kg SiO₂/m³ of core gas mixture,
- in addition at least double the amount of air, with respect to the amount of free-oxygen-containing gas introduced into the burner, is introduced into the flame tube and
- the rate of flow of the gas of feedstocks at the mouth of the burner is 40 to 65 m/s (with respect to standard conditions)
- and the mean normalised rate of flow of gas in the flame tube at the level of the mouth of the burner is between 8 and 12 m/s.

In general during the preparation of pyrogenic oxides, the rate of flow of gas in the water-cooled reaction chamber (flame tube) and in the subsequent cooling unit (cooling stretch) is adjusted in such a way that the best possible cooling power, that is to say rapid cooling of the reaction products, is ensured. In principle, it is true that the cooling power increases with decreasing rate of flow of gas. The lower limit is simply based on the requirement of still being able to transport the product through the pipes with the gas stream.

It was demonstrated in the process that although a considerable increase in the rate of flow of gas in the reaction chamber resulted in a reduced cooling power, it led to a powder with unexpected properties. Whereas physical characteristics such as BET surface area and DBP absorption are substantially unchanged as compared with powders according to the prior art, the powder exhibits a much lower structure.

Furtheron the metal oxide or metalloid oxide to be used according to the invention can be granules based on pyrogenically produced silicon dioxide which is characterised by a metals content of less than 9 ppm.

In a preferred embodiment the high-purity pyrogenically prepared silicon dioxide to be used according to the invention, can be characterised by the following metal contents:

| | | |
|---|---|---|
| Li | ppb | < = 10 |
| Na | ppb | < = 80 |
| K | ppb | < = 80 |
| Mg | ppb | < = 20 |
| Ca | ppb | < = 300 |
| Fe | ppb | < = 800 |
| Cu | ppb | < = 10 |
| Ni | ppb | < = 800 |
| Cr | ppb | < = 250 |
| Mn | ppb | < = 20 |
| Ti | ppb | < = 200 |
| Al | ppb | < = 600 |
| Zr | ppb | < = 80 |
| V | ppb | < = 5 |

The total metal content can then be 3252 ppb (- 3.2 ppm) or less.

In an embodiment of the invention, which is further preferred, the high-purity pyrogenically prepared silicon dioxide can be characterised by the following metal contents:

| | | |
|---|---|---|
| Li | ppb | < = 1 |
| Na | ppb | < = 50 |
| K | ppb | < = 50 |
| Mg | ppb | < = 10 |
| Ca | ppb | < = 90 |
| Fe | ppb | < = 200 |
| Cu | ppb | < = 3 |
| Ni | ppb | < = 80 |
| Cr | ppb | < = 40 |
| Mn | ppb | < = 5 |
| Ti | ppb | < = 150 |
| Al | ppb | < = 350 |
| Zr | ppb | < = 3 |
| V | ppb | < = 1 |

The total metal content can then be 1033 ppb (- 1.03 ppm) or less.

The process for the preparation of the high-purity pyrogenically prepared silicon dioxide is characterised in that silicon tetrachloride is in known manner reacted in a flame by means of high-temperature hydrolysis to give silicon dioxide, and a silicon tetrachloride is used here which has a metal content of less than 30 ppb.

In a preferred embodiment of the invention a silicon tetrachloride can be used which has the following metal contents in addition to silicon tetrachloride:

| | | | |
|---|---|---|---|
| Al | less than | 1 | ppb |
| B | less than | 3 | ppb |
| Ca | less than | 5 | ppb |
| Co | less than | 0.1 | ppb |
| Cr | less than | 0.2 | ppb |
| Cu | less than | 0.1 | ppb |
| Fe | less than | 0.5 | ppb |
| K | less than | 1 | ppb |
| Mg | less than | 1 | ppb |
| Mn | less than | 0.1 | ppb |
| Mo | less than | 0.2 | ppb |
| Na | less than | 1 | ppb |
| Ni | less than | 0.2 | ppb |
| Ti | less than | 0.5 | ppb |
| Zn | less than | 1 | ppb |
| Zr | less than | 0.5 | ppb |

Silicon tetrachloride having this low metal content can be prepared according to DE 100 30 251 or according to DE 100 30 252.

The metal content of the silicon dioxide according to the invention is within the ppm range and below (ppb range).

### Examples

The BET surface area is determined in accordance with DIN 66131.

The dibutyl phthalate absorption is measured with a RHEOCORD 90 instrument made by Haake, Karlsruhe. For this purpose, 16 g of the silicon dioxide powder, weighed out to an accuracy of 0.001 g, is placed in a mixing chamber, this is sealed with a lid and dibutyl phthalate is added at a pre-set rate of addition of 0.0667 ml/s via a hole in the lid. The mixer is operated with a motor speed of 125 revs per minute. After reaching maximum torque, the mixer and DBP addition are automatically switched off. The DBP absorption is calculated from the amount of DBP consumed and the amount of particles weighed out in accordance with:

DBP index (g/100 g) = (DBP consumed in g / initial weight of particles in g) x 100.

A programmable rheometer for testing complex flow behaviour, equipped with a standard rotation spindle, was available for determining the viscosity. Rate of shear: 5 to 100 rpm
Temperature of measurement: room temperature (23°C)
Concentration of dispersion: 30 wt.%

Procedure: 500 ml of dispersion are placed in a 600 ml glass beaker and tested at room temperature (statistical recording of temperature via a measuring sensor) under different rates of shear.

Determination of the compacted bulk density is based on DIN ISO 787/XI K 5101/18 (not sieved).

Determination of the pH is based on DIN ISO 787/IX, ASTM D 1280, JIS K 5101/24.

The image analyses were performed using a TEM instrument H 7500 made by Hitachi and a CCD camera MegaView II, made by SIS. Image magnification for evaluation purposes was 30000 : 1 at a pixel density of 3.2 nm. The number of particles evaluated was greater than 1000. Preparation was in accordance with ASTM 3849-89. The lower threshold limit for detection was 50 pixels.

Determining the maximum degree of filling in an aqueous dispersion: 200 g of fully deionised water were initially placed in a 11 vessel (diameter about 11 cm). A dissolver from VMA-Getzmann, model Dispermat® CA-40-C with a dissolver disc, diameter about 65 mm, was used as the dispersing unit.

At the start, the dissolver is operated at about 650 rpm. The powder is added in portions of about 5 g. After each addition, there is a waiting period until the powder has been completely incorporated into the suspension. Then the next portion is added. As soon as incorporation of an added amount of powder takes longer than about 10 s, the speed of the dissolver disc is increased to 1100 rpm. Then further stepwise addition is performed. As soon as incorporation of an added amount of powder takes longer than about 10 s, the speed of the dissolver disc is increased to 1700 rpm.

The maximum degree of filling is achieved when either no further powder is taken up by the dispersion, despite increased stirring power, i.e. the powder remains in dry form on the surface of the dispersion, or the dispersion becomes solid or the dispersion starts to form lumps.

The amount of powder added can be determined by difference weighing (preferably difference weighing of the powder stock). The maximum degree of filling is calculated as:

Maximum degree of filling = amount of powder added [g]/(amount of powder added [g] + amount of water initially introduced [g]) x 100%

### Example 1 (comparison example):

500 kg/h SiCl₄ are vaporised at about 90°C and transferred to the central tube of a burner of known construction. 145 Nm³/h of hydrogen and 207 Nm³ /h of air with an oxygen content of 35 vol.% are also introduced into this tube. This gas mixture is ignited and burnt in the flame tube of the water-cooled burner. The mean normalised rate of flow of gas in the flame tube at the level of the mouth of the burner is 0.7 m/s. After cooling the reaction gases, the pyrogenic silicon dioxide powder is separated from the hydrochloric acid-containing gases using a filter and/or a cyclone. The pyrogenic silicon dioxide powder is treated with water vapour and air in a deacidification unit.

**Examples 2 to 4 (comparison examples)** are performed in the same way as example 1. The parameters which are altered each time are given in Table 1.

### Example 5 (working example):

400 kg/h SiCl₄ are vaporised at about 90°C and transferred to the central tube of a burner of known construction. 195 Nm³/h of hydrogen and 303 Nm³/h of air with an oxygen content of 30 vol.% are also introduced into this tube. This gas mixture is ignited and burnt in the flame tube of the water-cooled burner. The mean normalised rate of flow of gas in the flame tube at the level of the mouth of the burner is 10 m/s. After cooling the reaction gases, the pyrogenic silicon dioxide powder is separated from the hydrochloric acid-containing gases using a filter and/or a cyclone. The pyrogenic silicon dioxide powder is treated with water vapour and air in a deacidification unit.

**Examples 6 to 8** are performed in the same way as described in example 1. The parameters which are altered each time are given in Table 1.

The analytical data for powders 1 to 8 are given in Table 2.

The powders according to the examples 5 to 8 exhibit much lower values for mean aggregate area, mean aggregate circumference and maximum and minimum aggregate diameter and thus much less structure than the powders in comparison examples 1 to 4.

The powders according to the example 5 to 8 also have a much higher maximum degree of filling and a much lower viscosity in an aqueous dispersion.

**Table 1: Experimental conditions and the flame parameters calculated therefrom**

| | | **Comparison examples** | | | | **Examples acc. to the invention** | | | |
|---|---|---|---|---|---|---|---|---|---|
| **Example** | | **1** | **2** | **3** | **4** | **5** | **6** | **7** | **8** |
| SiCl₄ | kg/h | 500 | 500 | 400 | 400 | 400 | 400 | 350 | 400 |
| H₂ core | Nm³/h | 145 | 210 | 255 | 190 | 195 | 195 | 145 | 195 |
| Air (primary air) | Nm³/h | 207 | 300 | 250 | 320 | 303 | 300 | 220 | 300 |
| O₂ content of air | Vol.% | 35 | 35 | 35 | 30 | 35 | 29.5 | 35 | 33 |
| Secondary air ^{(b)} | Nm³/h | - | 50 | 250 | 50 | 730 | 600 | 500 | 100 |
| Burner diameter | mm | 55 | 65 | 65 | 65 | 64 | 64 | 64 | 64 |
| Flame tube diameter | mm | 450 | 450 | 450 | 450 | 208 | 208 | 160 | 160 |
| lambda ^{(c)} | | 1.0 | 1.0 | 0.69 | 1.0 | 1.1 | 1.0 | 1.1 | 1.0 |
| gamma | | 1.1 | 1.6 | 2.4 | 1.8 | 1.8 | 1.8 | 1.6 | 1.8 |
| V_{B} ^{(d)} | m/s | 49 | 48 | 47 | 47 | 47 | 47 | 36 | 47 |
| V_{F} ^{(e)} | m/s | 0.7 | 1 | 1.28 | **1** | 10 | 9 | 12 | 8 |
| Throughput ^{(a)} | kg/m³ | 0.42 | **0.31** | 0.25 | 0.25 | 0.26 | 0.26 | 0.3 | 0.26 |

| | | | | | | | | | |
|---|---|---|---|---|---|---|---|---|---|
| (a) kg SiO₂/m³ of primary air + hydrogen + SiCl₄ (feedstocks); | | | | | | | | | |
| (b) air with 21 vol.% O₂; | | | | | | | | | |
| (c) with reference to primary air; | | | | | | | | | |
| (d) V_{B} = mean rate of discharge at the mouth of the burner (normalised); | | | | | | | | | |
| (e) V_{F} = mean rate of flow in the reaction chamber at the level of the mouth of the burner (normalised). | | | | | | | | | |

**Table 2: Analytical data for silicon dioxide powders**

| | | **Comparison examples** | | | | **Examples to be used in the invention** | | | |
|---|---|---|---|---|---|---|---|---|---|
| **Example** | | **1** | **2** | **3** | **4** | **5** | **6** | **7** | **8** |
| BET | m²/g | 44 | 55 | 49 | 60 | 45 | 44 | 60 | 55 |
| DBP | g/100g | 106 | 121 | 142 | 90 | 67 | 72 | 61 | 65 |
| Mean aggregate area | nm² | 23217 | 22039 | 24896 | 22317 | 17063 | 15972 | 16816 | 18112 |
| Mean aggregate circumference | nm | 1032 | 1132 | 1201 | 1156 | 742 | 658 | 704 | 699 |
| Aggregates < 1300 nm | % | 61 | 64 | 52 | 64 | 80 | 84 | 89 | 82 |
| Max. aggregate diameter | nm | 292 | (b) | (b) | (b) | 191 | 183 | (b) | (b) |
| Min. aggregate diameter | nm | 207 | (b) | (b) | (b) | 123 | 117 | (b) | (b) |
| Compacted bulk density | g/l | 112 | 90 | 89 | 117 | 117 | 105 | 110 | 123 |
| Viscosity ^{(a)} | mPas | 420 | 600 | 1200 | 380 | 20 | 33 | 48 | 18 |
| Maximum degree of filling | wt.% | 34 | 25 | 26 | 33 | 72 | 81 | 79 | 81 |
| pH | | 4.5 | 4.8 | 4.7 | 4.6 | 4.7 | 4.8 | 4.5 | 4.8 |

| | | | | | | | | | |
|---|---|---|---|---|---|---|---|---|---|
| (a) 30 wt.% dispersion at 5 rpm; | | | | | | | | | |
| (b) not determined | | | | | | | | | |

### Example 9 (Comparison Example)

500 kg/h SiCl₄ having a composition in accordance with Table 3 are evaporated at approx. 90°C and transferred into the central tube of a burner of known design. 190 Nm³/h hydrogen as well as 326 Nm³/h air having a 35 vol.% oxygen content are introduced additionally into this tube. This gas mixture is ignited and burns in the flame tube of the water-cooled burner. 15 Nm³/h hydrogen are introduced additionally into a jacket nozzle surrounding the central nozzle, in order to prevent baking-on. 250 Nm³/h air of normal composition are moreover introduced additionally into the flame tube. After cooling of the reaction gases the pyrogenic silicon dioxide powder is separated by means of a filter and/or a cyclone from the hydrochloric acid-containing gases. The pyrogenic silicon dioxide powder is treated with water vapour and air in a deacidifying unit in order to remove adherent hydrochloric acid. The metal contents are reproduced in Table 5.

### Example 10 (Embodiment Example)

500 kg/h SiCl₄ having a composition in accordance with Table 4 are evaporated at approx. 90°C and transferred into the central tube of a burner of known design. 190 Nm³/h hydrogen as well as 326 Nm³/h air having a 35 vol.% oxygen content are introduced additionally into this tube. This gas mixture is ignited and burns in the flame tube of the water-cooled burner. 15 Nm³/h hydrogen are introduced additionally into a jacket nozzle surrounding the central nozzle, in order to prevent baking-on. 250 Nm³/h air of normal composition are moreover introduced additionally into the flame tube. After cooling of the reaction gases the pyrogenic silicon dioxide powder is separated by means of a filter and/or a cyclone from the hydrochloric acid-containing gases. The pyrogenic silicon dioxide powder is treated with water vapour and air in a deacidifying unit in order to remove adhering hydrochloric acid.

The metal contents are reproduced in Table 5.

**Table 3: Composition of SiCl₄, Example 9**

| Al | B | Ca | Co | Cr | Cu | Fe | K | Mg | Mn | Mo | Na | Ni | Ti | Zn | Zr |
|---|---|---|---|---|---|---|---|---|---|---|---|---|---|---|---|
| ppb | ppb | ppb | ppb | ppb | ppb | ppb | ppb | ppb | ppb | ppb | ppb | ppb | ppb | ppb | ppb |
| 18 | 140 | 86 | <0.1 | 2.7 | 0.4 | 280 | 14 | - | 1.4 | - | 200 | 0.6 | 250 | | |

**Table 4: Composition of SiCl₄, Example 10**

| Al | B | Ca | Co | Cr | Cu | Fe | K | Mg | Mn | Mo | Na | Ni | Ti | Zn | Zr |
|---|---|---|---|---|---|---|---|---|---|---|---|---|---|---|---|
| ppb | ppb | ppb | ppb | ppb | ppb | ppb | ppb | ppb | ppb | ppb | ppb | ppb | ppb | ppb | ppb |
| <1 | <30 | <5 | <0.1 | <0.2 | <0.1 | <0.5 | <1 | <1 | <0.1 | <0.2 | <1 | <0.2 | <0.5 | <1 | <0.5 |

**Table 5: Metal contents of silicon dioxides (ppb)**

| | Example 10a | | Example 10b | | Example 9 |
|---|---|---|---|---|---|
| [ppb] | | | | | Comparison Example Aerosil® OX50 |
| Li | 0.8 | < = 10 | 0.5 | < = 1 | < 100 |
| Na | 68 | < = 80 | 49 | < = 50 | < 1000 |
| K | 44 | < = 80 | 46 | < = 50 | 10 |
| Mg | 10 | < = 20 | 10 | < = 10 | < 200 |
| Ca | 165 | < = 300 | 89 | < = 90 | 190 |
| Fe | 147 | < = 800 | 192 | < = 200 | < 100 |
| Cu | 3 | < = 10 | < 3 | < = 3 | < 100 |
| Ni | 113 | < = 800 | 79 | < = 80 | < 200 |
| Cr | 47 | < = 250 | 37 | < = 40 | < 100 |
| Mn | 3 | < = 20 | 2 | < = 5 | < 100 |
| Ti | 132 | < = 200 | 103 | < = 150 | 5600 |
| Al | 521 | < = 600 | 350 | < = 350 | 780 |
| Zr | 3 | < = 80 | < 3 | < = 3 | < 100 |
| V | 0.5 | < = 5 | < 0.5 | < = 1 | < 500 |
| | | | | | |
| | Σ 1257 ppb = 1.26 ppm | Σ 3255 ppb = 3.2 ppm | Σ 964 ppb = 0.96 ppm | Σ 1033 ppb = 1.03 ppm | Σ 9080 ppb = 9.08 ppm |

### Measuring method

The pyrogenically prepared silicon dioxides which are obtained are analysed as to their metal content. The samples are dissolved in an acid solution which comprises predominantly HF.

The SiO₂ reacts with the HF, forming SiF₄ + H₂O. The SiF₄ evaporates, leaving behind completely in the acid the metals which are to be determined. The individual samples are diluted with distilled water and analysed against an internal standard by inductively coupled plasma-atomic emission spectroscopy (ICP-AES) in a Perkin Elmer Optima 3000 DV. The imprecision of the values is the result of sample variations, spectral interferences and the limitations of the measuring method. Larger elements have a relative imprecision of ± 5%, while the smaller elements have a relative imprecision of ± 15%.

In the above example, the choice of a plasma torch does not restrict the generality of the method which can also be implemented by any other means for delivering heat energy and creating a temperature greater than 100 °C., and in particular by means of a flame from a combustion device.

## Claims

1. A method of producing glass of optical quality by melting or optionally by purifying a presintering composition in which a plasma or a flame from a heat energy supply means is fed by a first feed duct with grains of a presintering composition, wherein optionally a second feed duct feeds the plasma or flame with a fluorine or chlorine compound mixed with a carrier gas, the feed conditions of the two ducts are adjusted to cause alkali or alkaline-earth elements contained in the presintering composition grains to be react with the fluorine or the chlorine of the fluorine or chlorine compound.

2. A method of depositing a presintering composition on optical devices, in which a preform extending in a longitudinal direction is set into move about its axis in front of a plasma or flame coming from a heat energy supply means which moves back and forth substantially parallel to the longitudinal direction of the preform, and in which a first feed duct feeds the plasma or the flame with grains of a presintering composition, wherein optionally a second feed duct feeds the plasma or flame with a fluorine or chlorine compound mixed with a carrier gas, the feed conditions of the two ducts being adjusted to cause alkali or alkaline-earth elements contained in the grains of a presintering composition to react with the fluorine or the chlorine of the fluorine or chlorine compound.

3. Method according to claim 1, **characterized in that** the presintering composition are granules of metal oxide or metalloid oxide of a pyrogenic silicon dioxide powder with
- a BET surface area of 30 to 90 m²/g,
- a DBP index of 80 or less
- a mean aggregate area of less than 25000 nm²,
- a mean aggregate circumference of less than 1000 nm, wherein at least 70% of the aggregates have a circumference of less than 1300 nm.

4. Method according to claim 1, **characterised in that** the presintering composition are granules of metal oxides or metalloid oxides of a high-purity pyrogenically prepared silicon dioxide, **characterised by** a metal content of less than 9 ppm.

5. Method according to claim 4, **characterised in that** the presintering composition are granules of metal oxide or metalloid oxide of a high-purity pyrogenically prepared silicon dioxide, **characterised by** the following metal contents:
| | | | |
|---|---|---|---|
| Li | ppb | < = | 10 |
| Na | ppb | < = | 80 |
| K | ppb | < = | 80 |
| Mg | ppb | < = | 20 |
| Ca | ppb | < = | 300 |
| Fe | ppb | < = | 800 |
| Cu | ppb | < = | 10 |
| Ni | ppb | < = | 800 |
| Cr | ppb | < = | 250 |
| Mn | ppb | < = | 20 |
| Ti | ppb | < = | 200 |
| Al | ppb | < = | 600 |
| Zr | ppb | < = | 80 |
| V | ppb | < = | 5 |
